# EUROPEAN PATENT SPECIFICATION

(11) **EP 3 059 098 B1**
(45) Date of publication and mention of the grant of the patent: **26.05.2021**
(21) Application number: 16156218.6
(22) Date of filing: 18.02.2016
(51) Int. Cl.: B60B 7/00, B60B 27/00, F16C 33/72, F16C 41/00, F16C 33/78, F16C 19/18

(54) **INSERT MOLDED ARTICLE, MANUFACTURING METHOD FOR PROTECTIVE COVER HAVING SENSOR HOLDER PART, AND MANUFACTURING METHOD FOR BEARING DEVICE INCLUDING THE PROTECTIVE COVER**
EINSATZFORMARTIKEL, HERSTELLUNGSVERFAHREN FÜR SCHUTZABDECKUNG MIT SENSORHALTERTEIL UND HERSTELLUNGSVERFAHREN FÜR LAGERVORRICHTUNG MIT SCHUTZABDECKUNG
ARTICLE MOULÉ PAR INSERTION, PROCÉDÉ DE FABRICATION D'UN COUVERCLE PROTECTEUR AYANT UNE PARTIE DE SUPPORT DE DÉTECTEUR ET PROCÉDÉ DE FABRICATION D'UN DISPOSITIF DE PALIER COMPRENANT LE COUVERCLE DE PROTECTION

(30) Priority: 23.02.2015 JP 2015032431; 23.02.2015 JP 2015032432; 11.12.2015 JP 2015242102
(43) Date of publication of application: 24.08.2016
(73) Proprietor: Nakanishi Metal Works Co., Ltd., Osaka-shi, Osaka 530-8566 (JP)
(72) Inventor: Kamiji, Michiyuki, Osaka, 530-8566 (JP); Nakamura, Masayoshi, Osaka, 530-8566 (JP); Komai, Toshinari, Osaka, 530-8566 (JP)
(74) Representative: Vossius & Partner Patentanwälte Rechtsanwälte mbB

(56) References cited:
- JP-A- H0 275 961
- JP-A- H1 151 949
- JP-A- 2006 126 118
- JP-A- 2013 079 701
- US-A1- 2007 286 541

## Description

### Technical Field

The present invention relates to a manufacturing method for a cup-shaped protective cover that is press-fitted into an outer ring of a bearing to cover a magnetic encoder, more specifically to a protective cover having a sensor holder part holding a magnetic sensor opposed to the magnetic encoder.

### Background Art

An antilock brake system widely used in automobiles for efficient and safety braking without wheel lock detects the rotation speeds of wheels by a rotation speed detector (wheel speed sensor), calculates the acceleration and the deceleration and estimates the vehicle speed and the slip ratio by a controller, and drives an actuator to control the brake fluid pressure based on the calculation and estimation results, for example.

Bearing devices including such a rotation speed detector in a rolling bearing for supporting automobile wheels (hub bearing) are also widely used. Such a bearing device may be structured such that a magnetic encoder having N poles and S poles alternately arranged at constant intervals in the circumferential direction is fitted to the inner ring of a bearing, a magnetic sensor for detecting the rotation of the magnetic encoder is attached to the outer ring so as to be opposed to the magnetic encoder, and a protective cover covering the magnetic encoder from the inner side to protect the magnetic encoder is press-fitted into the inner end portion of the outer ring (for example, refer to JP 2011-084265 A).

The protective cover keeps the magnetic encoder from getting hit by pebbles, mud water, or the like and prevents damage to the magnetic encoder. In addition, the protective cover eliminates the need for a seal member on the outer side of the magnetic encoder, which decreases a sliding resistance to reduce rotation torque of the bearing device.

In addition, to eliminate a troublesome work of adjusting the air gap between the magnetic encoder and the magnetic sensor, the protective cover having the sensor holder part for holding the magnetic sensor may be configured such that a boss part composed of a synthetic resin is integrally joined to part of the bottom of a cup-shaped main part (cap) formed in a cup shape by press working on a non-magnetic steel plate, and a nut is integrally joined to the boss part to fix the magnetic sensor (for example, refer to JP 2013-117455 A).

JP H11 51949 A discloses a rotation sensor provided with a sensor body for detecting the rotational condition of a rotating body, an opening through which a signal output end is introduced to the outside from the sensor body, a cover for covering the sensor body, a resin-formed member for integrating a part of the sensor body with the cover, a seal member arranged so as to surround the opening and to be brought into contact with the surface of the cover, and a pressing member for restraining the movement of the seal member.

US 2007/286541 A1 discloses a sensor-equipped cover that is mounted to an outer ring member of a vehicular-wheel bearing assembly that is provided with a sensor portion for detecting the rotation of an inner ring member rotatably disposed on a radially inner side of the outer ring member via rolling elements, and is formed of a metal. The sensor portion includes a sensor element for magnetically detecting the rotation of the inner ring member, a connector for supporting a terminal electrically connected with the sensor element, and a capacitor. The sensor portion is molded of a synthetic resin and unified with the cover at its part extended through and around a through-hole formed in the cover.

JP H02 75961 A proposes to unite a sensor housing a rotation sensor element with a bearing cover to one body by resin molding.

### Summary of Invention

### Technical Problem

In the structure of the protective cover having the sensor holder part as described in JP 2013-117455 A, the boss part composed of a synthetic resin is generally adhered to part of the bottom of the cup-shaped main part (cap). Therefore, even when minute dimples are formed on the adhesion surface of the bottom, the fixing strength between the cup-shaped main part and the boss part may become lower due to long-term use and depending on usage environments, resulting in dropping of the boss part with reduction in reliability.

In light of the foregoing circumstances, to solve the problem, an object of the present invention is to provide an insert molded article that maintains high reliability over the long term, a manufacturing method for a protective cover having a sensor holder part, and a manufacturing method for a bearing device including the protective cover, by increasing fixing strength between an insert article and a synthetic resin through insert molding.

### Solution to Problem

To solve the foregoing problem, a manufacturing method for a protective cover having a sensor holder part according to the present invention is a manufacturing method for a protective cover for use in a bearing device including: an inner ring with an inner ring track surface on an outer periphery; an outer ring with an outer ring track surface on an inner periphery; a bearing having a rolling element rolling between the inner ring track surface and the outer ring track surface; a magnetic encoder that is positioned at one axial end of the bearing, fixed to the inner ring, and has N and S poles alternately arranged at regular intervals in an circumferential direction; and a magnetic sensor that is opposed to the magnetic poles of the magnetic encoder to detect rotation of the magnetic encoder, wherein the protective cover has: a cup-shaped main part that is formed in a cup shape from a non-magnetic steel plate, positioned when mounted at the one axial end of the bearing, and press-fitted in a mounted state into the outer ring; and a synthetic resin sensor holder part that is integrally joined to the cup-shaped main part while holding a nut for attaching the magnetic sensor, the cup-shaped main part having a through hole in a bottom, and the manufacturing method includes: a press working step of forming the cup-shaped main part by press working; and an injection molding step of setting the nut and the cup-shaped main part as insert articles into a metal mold, tightening the mold, charging molten plastic into a cavity to perform injection molding to form a wrap-around portion extending radially outward on an inner side of the bottom through the through hole at the sensor holder part integrated with the nut and the cup-shaped main part (claim 1).

By press-fitting the protective cover manufactured by the foregoing manufacturing method into the outer ring of the bearing with the magnetic encoder fixed to the inner ring, the protective cover is axially positioned with respect to the magnetic encoder, and the magnetic sensor is axially positioned and held with respect to the protective cover by the sensor holder part of the protective cover, whereby the air gap between the magnetic sensor and the magnetic encoder is completely adjusted.

This eliminates the need for a troublesome work of adjusting the air gap between the magnetic encoder and the magnetic sensor.

In addition, according to the manufacturing method, by the injection molding with the nut and the cup-shaped main part as insert articles, the wrap-around portion extending radially outward on the inner side of the bottom of the cup-shaped main part through the through hole of the bottom is formed at the synthetic resin sensor holder part integrated with the nut and the cup-shaped main part.

Therefore, in the protective cover manufactured by the foregoing manufacturing method, the cup-shaped main part and the sensor holder part are mechanically joined to each other. This increases the fixing strength between the cup-shaped main part and the sensor holder part to ensure high reliability of joint between the cup-shaped main part and the sensor holder part over the long term.

It is preferred that the manufacturing method includes at least one of a vulcanization and adhesion step of vulcanizing and adhering an endless seal body to a periphery of the through hole in the cup-shaped main part and an adhesive application step of applying a thermoset adhesive to the periphery (claim 2).

According to the manufacturing method, even when the through hole is formed in the bottom of the cup-shaped main part, the vulcanization and adhesion step or the adhesive application step allows the seal body or the adhesive layer on the periphery of the through hole intervenes between the cup-shaped main part and the sensor holder part to retain airtightness of the protective cover.

It is also preferred that the bottom of the cup-shaped main part has a disc portion as a bottommost portion, a cylindrical portion extending axially from an outer edge of the disc portion, and an annular portion extending radially outward from an axial end edge of the cylindrical portion, and the sensor holder part has a portion covering the disc portion and the cylindrical portion (claim 3).

According to the manufacturing method, the bottom of the cup-shaped main part formed at the press working step has the disc portion as an bottommost portion, the cylindrical portion extending axially from the outer edge of the disc portion, and the annular portion extending radially outward from the axial end edge of the cylindrical portion, and the sensor holder part formed at the injection molding step has the portion covering the step formed by the disc portion with the through hole of the cup-shaped main part and the cylindrical portion extending axially from the outer edge of the disc portion. Accordingly, the protective cover manufactured by the manufacturing method has the effect of retaining some degree of airtightness even without having to provide the vulcanization and adhesion step or the adhesive application step, thereby achieving reduction in manufacturing costs.

To solve the foregoing problem, a manufacturing method for a protective cover having a sensor holder part according to the present invention is a manufacturing method for a protective cover for use in a bearing device including: an inner ring with an inner ring track surface on an outer periphery; an outer ring with an outer ring track surface on an inner periphery; a bearing having a rolling element rolling between the inner ring track surface and the outer ring track surface; a magnetic encoder that is positioned at one axial end of the bearing, fixed to the inner ring, and has N and S poles alternately arranged at regular intervals in an circumferential direction; and a magnetic sensor that is opposed to the magnetic poles of the magnetic encoder to detect rotation of the magnetic encoder, wherein the protective cover has: a cup-shaped main part that is formed in a cup shape from a non-magnetic steel plate, positioned when mounted at the one axial end of the bearing, and press-fitted in a mounted state into the outer ring; and a synthetic resin sensor holder part that is integrally joined to the cup-shaped main part while holding a nut for attaching the magnetic sensor, the bottom of the cup-shaped main part has a disc portion as a bottommost portion, a cylindrical portion extending axially from an outer edge of the disc portion, and an annular portion extending radially outward from an axial end edge of the cylindrical portion, the cylindrical portion having a concave or a convex, and the manufacturing method includes: a press working step of forming the cup-shaped main part by press working; and an injection molding step of setting the nut and the cup-shaped main part as insert articles into a metal mold, tightening the mold, charging molten plastic into a cavity to perform injection molding to form a step covering portion covering a step formed by the disc portion and the cylindrical portion at the sensor holder part integrated with the nut and the cup-shaped main part (claim 4).

By press-fitting the protective cover manufactured by the foregoing manufacturing method into the outer ring of the bearing with the magnetic encoder fixed to the inner ring, the protective cover is axially positioned with respect to the magnetic encoder, and the magnetic sensor is axially positioned and held with respect to the protective cover by the sensor holder part of the protective cover, whereby the air gap between the magnetic sensor and the magnetic encoder is completely adjusted.

This eliminates the need for a troublesome work of adjusting the air gap between the magnetic encoder and the magnetic sensor.

In addition, according to the manufacturing method, by the injection molding with the nut and the cup-shaped main part as insert articles, the step covering portion covering the step formed by the disc portion and the cylindrical portion of the cup-shaped main part is formed at the synthetic resin sensor holder part integrated with the nut and the cup-shaped main part. The synthetic resin of the sensor holder part engages with the concave or the convex formed in the cylindrical portion of the cup-shaped main part.

Therefore, in the protective cover manufactured by the foregoing manufacturing method, the cup-shaped main part and the sensor holder part are mechanically joined to each other. This increases the fixing strength between the cup-shaped main part and the sensor holder part to ensure high reliability of joint between the cup-shaped main part and the sensor holder part over the long term.

Further, a manufacturing method for a bearing device according to the present invention is a manufacturing method for a bearing device including: an inner ring with an inner ring track surface on an outer periphery; an outer ring with an outer ring track surface on an inner periphery; a bearing having a rolling element rolling between the inner ring track surface and the outer ring track surface; a magnetic encoder that is positioned at one axial end of the bearing, fixed to the inner ring, and has N and S poles alternately arranged at regular intervals in an circumferential direction; and a magnetic sensor that is opposed to the magnetic poles of the magnetic encoder to detect rotation of the magnetic encoder, wherein the manufacturing method includes a step of press-fitting the protective cover manufactured by the manufacturing method for the protective cover having the sensor holder part into the outer ring (claim 5).

### Advantageous Effects of Invention

According to the insert molded article, the manufacturing method for a protective cover having a sensor holder part, and the manufacturing method for a bearing device including the protective cover according to the present invention described above, the synthetic resin (sensor holder part) of the insert molded article (protective cover) and the insert article (cup-shaped main part) are mechanically joined to each other. Accordingly, the fixing strength between the insert article and the synthetic resin becomes large to produce the significantly advantageous effect of ensuring high reliability of joint between the insert article and the synthetic resin over the long term. Brief Description of Drawings

Fig. 1 is a partial vertical cross-sectional view of a bearing device including a protective cover with a sensor holder part ;
Fig. 2 is an enlarged perspective vertical cross-sectional view of main components of the protective cover with the sensor holder part to which a magnetic sensor is attached;
Fig. 3 is a vertical cross-sectional view of an example of an injection metal mold;
Fig. 4 is a partial vertical cross-sectional view of a bearing device including a protective cover with a sensor holder part ;
Fig. 5 is an enlarged perspective vertical cross-sectional view of main components of the protective cover with the sensor holder part to which a magnetic sensor is attached;
Fig. 6 is a partial vertical cross-sectional view of a bearing device including a protective cover with a sensor holder part ;
Fig. 7 is an enlarged perspective vertical cross-sectional view of main components of the protective cover with the sensor holder part to which a magnetic sensor is attached;
Fig. 8 is a partial vertical cross-sectional view of the same; and
Fig. 9 is a vertical cross-sectional view of an example of an injection metal mold.

### Description of Embodiments

Next, embodiments of the present invention will be described in detail with reference to the accompanying drawings. However, the present invention is not limited to the embodiments illustrated in the accompanying drawings but includes all of embodiments satisfying the requirements described in the claims.

### First Embodiment

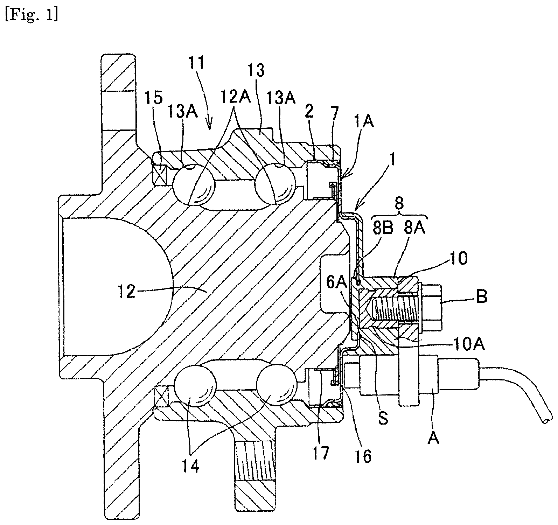

A bearing device 11 according to a first embodiment of the present invention illustrated in the partial vertical cross-sectional view of Fig. 1 includes a magnetic encoder 16, a protective cover 1, and a magnetic sensor A arranged at one axial end of the bearing, and a seal member 15 arranged at the other axial end of the bearing, and others, in addition to a bearing with an inner ring 12 rotating relative to an outer ring 13.

The bearing has the inner ring 12 with an inner ring track surface 12A on the outer periphery, the outer ring 13 with an outer ring track surface 13A on the inner periphery, and rolling elements 14, 14, ... rolling between the inner ring track surface 12A and the outer ring track surface 13A, and others.

The magnetic encoder 16 has N and S poles alternately arranged at regular intervals in the circumferential direction, and is fixed to the inner ring 12 by a support member 17 positioned at the one axial end of the bearing.

The protective cover 1 is attached to the outer ring 13 to seal the one axial end of the bearing and has a sensor holder part 8 holding the magnetic sensor A.

The magnetic sensor A attached to the sensor holder part 8 of the protective cover 1 is opposed to the magnetic encoder 16 to detect the rotation of the magnetic encoder 16.

At the bearing device 11 illustrated in Fig. 1, a cup-shaped main part 1A of the protective cover 1 is press-fitted into the outer ring 13 of the bearing in which the magnetic encoder 16 is fixed to the inner ring 12, whereby the protective cover 1 is axially positioned with respect to the magnetic encoder 16.

The magnetic sensor A is axially positioned and held with respect to the protective cover 1 by the sensor holder part 8 of the protective cover 1, and an air gap between the magnetic sensor A and the magnetic encoder 16 is completely adjusted.

This eliminates a troublesome work of adjusting the air gap between the magnetic encoder 16 and the magnetic sensor A.

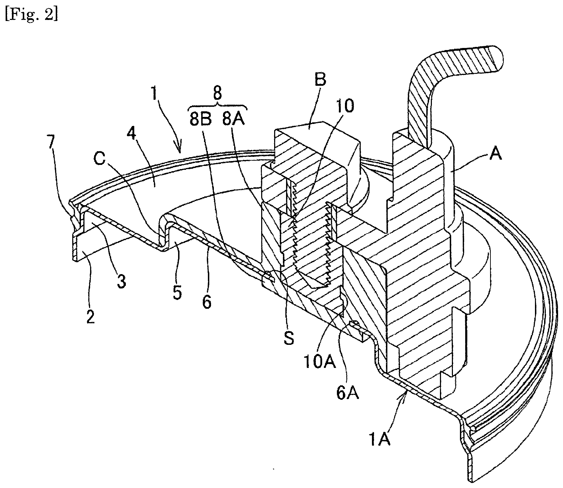

As illustrated in the partial vertical cross-sectional view of Fig. 1 and the enlarged perspective vertical cross-sectional view of main components of Fig. 2, the protective cover 1 according to the first embodiment of the present invention has the cup-shaped main part 1A formed in a cup shape by press working of a non-magnetic steel plate and the synthetic resin sensor holder part 8 that is integrally joined to the cup-shaped main part 1A while holding a nut 10 to which an attachment bolt B for attachment of the magnetic sensor A is screwed.

The protective cover 1 is an insert molded article, and the cup-shaped main part 1A and the nut 10 are insert articles.

The cup-shaped main part 1A is composed of a first cylindrical portion 2 press-fitted into the outer ring 13, a second cylindrical portion 3 that is smaller in diameter than the first cylindrical portion 2, connects to an end edge of the first cylindrical portion 2, and has an outer peripheral surface to which a seal body 7 is vulcanized and adhered, an annular portion 4 that connects to an end edge of the second cylindrical portion 3 and extends radially inward, a third cylindrical portion 5 that connects to an inner-side end edge of the annular portion 4 and extends axially, and a disc portion 6 connecting to an end edge of the third cylindrical portion 5. The disc portion 6 (the bottom of the cup-shaped main part 1A) has a through hole 6A.

The bottom of the cup-shaped main part 1A has the disc portion 6 as a bottommost portion, a third cylindrical portion 5 extending axially from an outer edge of the disc portion 6, the annular portion 4 extending radially outward from an axial end edge of the third cylindrical portion 5, and a step C (see Fig. 2) formed by the disc portion 6 and the third cylindrical portion 5 extending axially from the outer edge of the disc portion 6.

The sensor holder part 8 integrated with the cup-shaped main part 1A has a base portion 8A holding the nut 10 and a wrap-around portion 8B that extends radially outward at the inner side of the cup-shaped main part 1A through the through hole 6A of the disc portion 6. The base portion 8A has a portion covering the disc portion 6 and the third cylindrical portion 5.

An endless seal body S intervenes between the cup-shaped main part 1A and the sensor holder part 8 around the through hole 6A.

The seal bodies 7 and S are elastic bodies such as synthetic rubbers and can be formed of one of rubbers such as nitrile rubber (NBR), hydrogenated nitrile rubber (HNBR), acrylic rubber (ACM), ethylene-acrylic rubber (AEM), fluorine rubber (FKM, FPM), and silicone rubber (VMQ) or an appropriate blend of two or more of these rubbers.

Next, a manufacturing method for the protective cover 1 having the sensor holder part 8 will be described.

### <Press Working Step>

At a press working step, the cup-shaped main part 1A constituting the protective cover 1 is formed from an austenitic stainless-steel plate material by press working, for example.

### <Vulcanization and Adhesion Step>

At a vulcanization and adhesion step, the seal body 7 is vulcanized and adhered to the outer peripheral surface of the second cylindrical portion 3 of the cup-shaped main part 1A shaped at the press working step, and the endless (for example, annular) seal body S is vulcanized and adhered around the through hole 6A of the disc portion 6.

Alternatively, at an adhesive application step of applying a thermoset adhesive around the through hole 6A of the disc portion 6, instead of the seal body S, may be performed, or both the vulcanization and adhesion step of vulcanizing and adhering the seal body S and the adhesive application step of applying the thermoset adhesive may be performed.

### <Injection Molding Step>

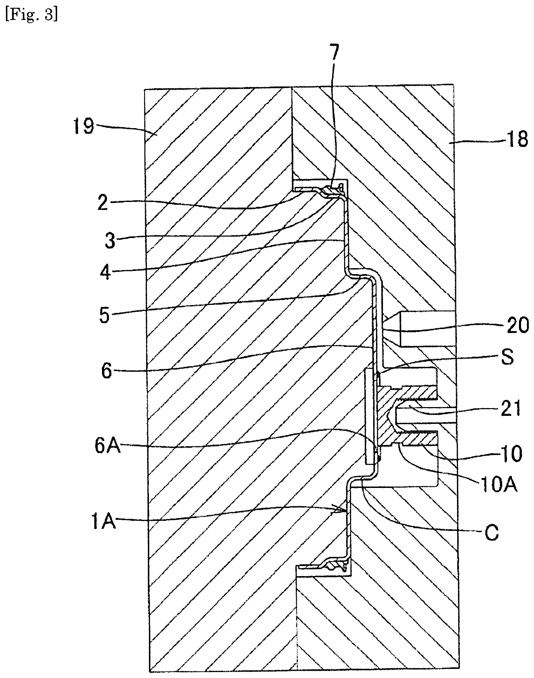

In an injection mold illustrated in the vertical cross-sectional view of Fig. 3, first, the nut 10 as an insert article is set on a support shaft 21 of a fixed mold 18.

The cup-shaped main part 1A as an insert article having undergone the press working step and the vulcanization and adhesion step is set in a movable mold 19.

Next, while the fixed mold 18 and the movable mold 19 are mounted on an injection molding machine and are tightened, molten plastic is injected through a sprue and charged from a gate 20 into a cavity between the fixed mold 18 and the movable mold 19.

Next, the molten plastic is cooled and solidified, and then the movable mold 19 is opened to remove the insert molded article.

In the protective cover 1 having undergone the injection molding step as described above (see Figs. 1 and 2), the synthetic resin is entered into a circumferential groove 10A of the nut 10 to retain the nut 10, and a wrap-around portion 8B in which the synthetic resin wraps around the disc portion 6 radially outward through the through hole 6A is formed. Accordingly, the cup-shaped main part 1A and the sensor holder part 8 are mechanically joined to each other.

One or both of the seal body S and the adhesive layer intervene between the cup-shaped main part 1A and the sensor holder part 8 around the through hole 6A of the disc portion 6, thereby to keep the airtightness of the protective cover 1.

The base portion 8A of the sensor holder part 8 has the portion covering the disc portion 6 and the third cylindrical portion 5 (the step C illustrated in Fig. 2) to produce the effect of keeping airtightness to some degree without the seal body S and the adhesive layer. Accordingly, the seal body S or the adhesive layer may not be provided depending on the required specifications.

### Second Embodiment

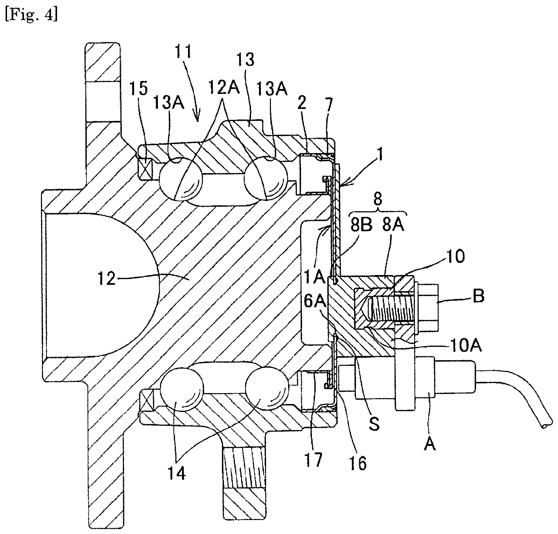

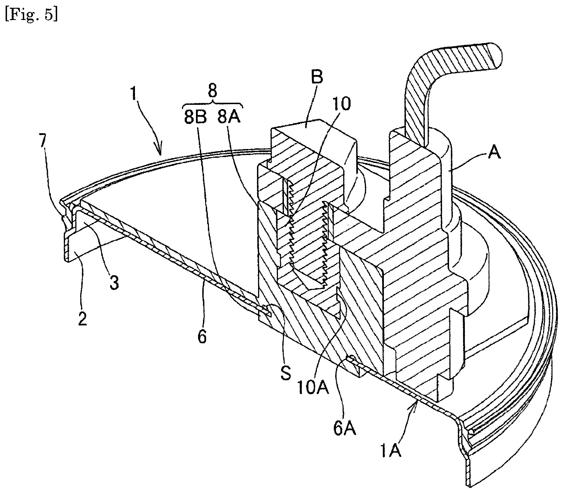

In a bearing device 11 and a protective cover 1 according to a second embodiment of the present invention illustrated in the partial vertical cross-sectional view of Fig. 4 and the protective cover 1 according to the second embodiment of the present invention illustrated in the enlarged perspective vertical cross-sectional view of main components of Fig. 5, the components with the same reference signs as those in the first embodiment illustrated in Figs. 1 and 2 are the components identical or equivalent to the components in the first embodiment, and descriptions thereof will be omitted.

A cup-shaped main part 1A of the protective cover 1 in the second embodiment is composed of a first cylindrical portion 2 press-fitted into the outer ring 13, a second cylindrical portion 3 that is smaller in diameter than the first cylindrical portion 2, connects to an end edge of the first cylindrical portion 2, and has an outer peripheral surface to which a seal body 7 is vulcanized and adhered, and a disc portion 6 connecting to an end edge of the second cylindrical portion 3. The disc portion 6 (the bottom of the cup-shaped main part 1A) has a through hole 6A.

Accordingly, the cup-shaped main part 1A in the second embodiment does not have the step C in the first embodiment illustrated in Fig. 2, which allows simplification of the processing process of the cup-shaped main part 1A with reduction in manufacturing costs of the protective cover 1.

According to the configuration of the protective cover 1 in the first and second embodiments, the synthetic resin sensor holder part 8 of the protective cover 1 as an insert molded article has the wrap-around portion 8B extending radially outward through the through hole 6A of the bottom of the cup-shaped main part 1A as an insert article, whereby the cup-shaped main part 1A and the sensor holder part 8 are mechanically joined to each other.

Accordingly, the fixing strength between the cup-shaped main part 1A and the sensor holder part 8 becomes large to produce the significantly advantageous effect of ensuring high reliability of joint between the cup-shaped main part 1A and the sensor holder part 8 over the long term.

The technique for mechanically joining the cup-shaped main part 1A and the sensor holder part 8 in the protective cover 1 as described above is also applicable to insert molded articles other than the protective cover 1 in which the insert article and the synthetic resin are integrated by insert molding.

Specifically, a through hole is formed in a joining surface between an insert article and a synthetic resin, and a wrap-around portion extending radially outward from the joining surface through the through hole is formed in the synthetic resin.

### Third Embodiment

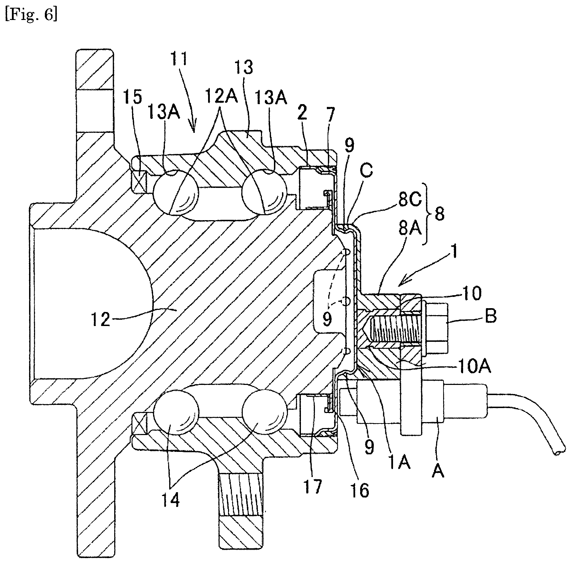

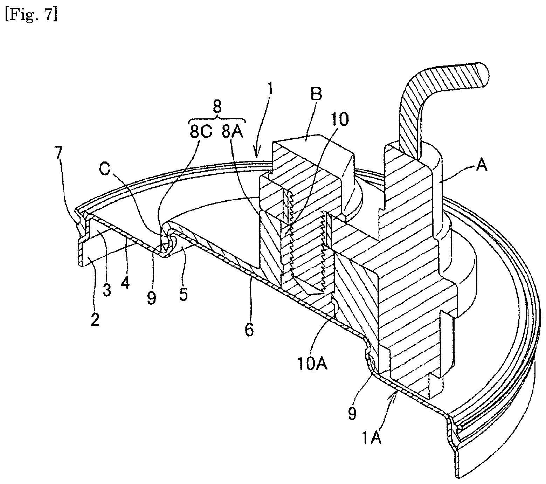

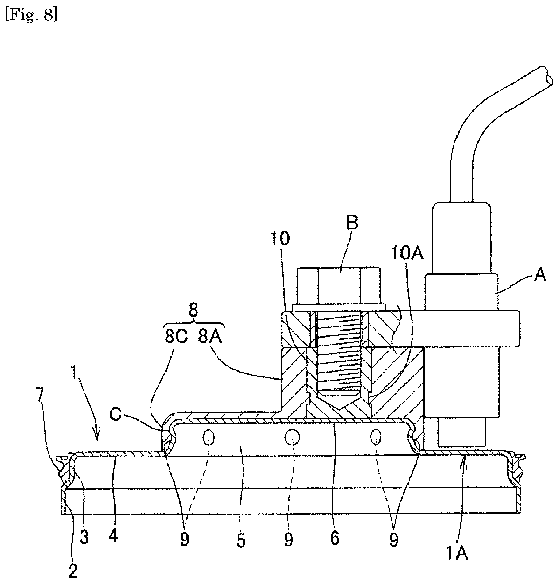

In a bearing device 11 and a protective cover 1 according to a third embodiment of the present invention illustrated in the partial vertical cross-sectional view of Fig. 6 and the protective cover 1 according to the third embodiment of the present invention illustrated in the enlarged perspective vertical cross-sectional view of main components of Fig. 7 and the partial vertical cross-sectional view of Fig. 8, the components with the same reference signs as those in the first embodiment illustrated in Figs. 1 and 2 are the components identical or equivalent to the components in the first embodiment, and descriptions thereof will be omitted.

The cup-shaped main part 1A of the protective cover 1 in the third embodiment has concaves 9, 9, ... formed in the outer peripheral surface of the third cylindrical portion 5 by pressing the third cylindrical portion 5 with a punch or the like from the outside and thus does not have the through hole 6A in the first embodiment.

The sensor holder part 8 has the base portion 8A holding the nut 10 and a step covering portion 8C covering the step C formed by the disc portion 6 and the third cylindrical portion 5. The synthetic resin of the sensor holder part 8 is entered into the concaves 9, 9, ... to integrate the sensor holder part 8 with the cup-shaped main part 1A.

Next, a manufacturing method for the protective cover 1 having the sensor holder part 8 will be described.

### <Press Working Step>

At a press working step, the cup-shaped main part 1A constituting the protective cover 1 is formed from an austenitic stainless-steel plate material by press working, for example.

### <Vulcanization and Adhesion Step>

At a vulcanization and adhesion step, the seal body 7 is vulcanized and adhered to the outer peripheral surface of the second cylindrical portion 3 of the cup-shaped main part 1A shaped at the press working step.

Alternatively, an adhesive application step of applying a thermoset adhesive to a joint surface of the cup-shaped main part 1A relative to the synthetic resin may be performed to improve the joint strength between the cup-shaped main part 1A and the synthetic resin.

### <Injection Molding Step>

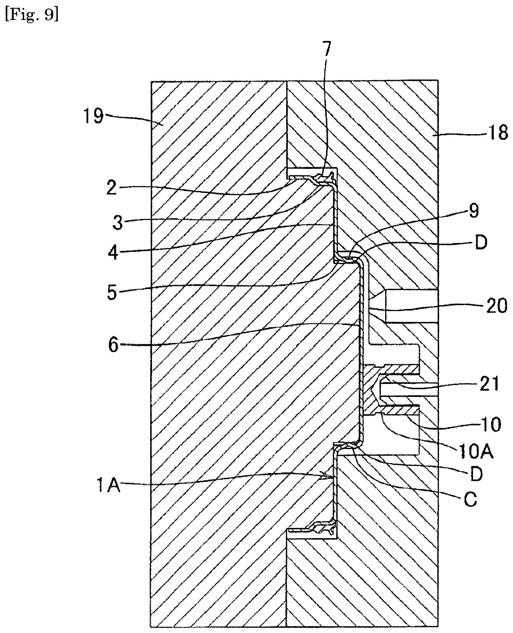

In an injection mold illustrated in the vertical cross-sectional view of Fig. 9, first, the nut 10 as an insert article is set on a support shaft 21 of a fixed mold 18.

The cup-shaped main part 1A as an insert article having undergone the press working step and the vulcanization and adhesion step is set in a movable mold 19.

Next, while the fixed mold 18 and the movable mold 19 are mounted on an injection molding machine and are tightened, molten plastic is injected through a sprue and charged from a gate 20 into a cavity between the fixed mold 18 and the movable mold 19.

Next, the molten plastic is cooled and solidified, and then the movable mold 19 is opened to remove the insert molded article.

In the protective cover 1 having undergone the injection molding step as described above (see Figs. 6 to 8), the synthetic resin is entered into a circumferential groove 10A of the nut 10 to retain the nut 10. In addition, the sensor holder part 8 has the step covering portion 8C covering the step C of the cup-shaped main part 1A, and the synthetic resin of the sensor holder part 8 is entered into the concaves 9, 9, ... formed in the outer peripheral surface of the third cylindrical portion 5 of the cup-shaped main part 1A. Accordingly, the cup-shaped main part 1A and the sensor holder part 8 are mechanically joined to each other.

As illustrated in Figs. 6 to 8, the concaves 9, 9, ... are formed in the outer peripheral surface of the third cylindrical portion 5 to produce convexes in the inner peripheral surface of the third cylindrical portion 5. Accordingly, even in the presence of an undercut portion, the movable mold 19 illustrated in Fig. 9 has smaller-diameter portions D, D, ... at positions corresponding to the convexes, which facilitates setting of the cup-shaped main part 1A to the movable mold 19 and removal of the protective cover 1 from the movable mold 19.

According to the configuration of the protective cover 1 in the third embodiment, the synthetic resin sensor holder part 8 covers the step C formed by the disc portion 6 as a bottommost portion of the cup-shaped main part 1A as an insert article and the third cylindrical portion 5 extending axially from the outer edge of the disc portion 6, and the sensor holder part 8 engages with the concaves 9, 9, ... formed in the third cylindrical portion 5, whereby the cup-shaped main part 1A and the sensor holder part 8 are mechanically joined to each other.

Accordingly, the fixing strength between the cup-shaped main part 1A and the sensor holder part 8 becomes large to ensure high reliability of joint between the cup-shaped main part 1A and the sensor holder part 8 over the long term.

In the case described above, the concaves 9, 9, ... are formed in the outer peripheral surface of the third cylindrical portion 5 as a smaller-diameter side portion of the cup-shaped main part 1A. Alternatively, convexes may be formed in the outer peripheral surface of the third cylindrical portion 5. In this case, there is no need for the diameter-reduced portions D, D, ... in the movable mold 19 illustrated in Fig. 9.

The technique for mechanically joining the cup-shaped main part 1A and the sensor holder part 8 in the protective cover 1 as described above is also applicable to insert molded articles other than the protective cover 1 in which the insert article and the synthetic resin are integrated by insert molding.

Specifically, an insert article is formed in a cup shape, the bottom of the cup shape is provided with a step having a side portion that is smaller in diameter than a side portion of the cup shape and connects to the bottommost portion, concaves or convexes are formed in the smaller-diameter side portion, and the synthetic resin has a portion covering the step (the bottommost portion and the smaller-diameter side portion).

### Reference Signs List

- 1: Protective cover (insert molded article)
- 1A: Cup-shaped main part (insert article)
- 2: First cylindrical portion
- 3: Second cylindrical portion
- 4: Annular portion
- 5: Third cylindrical portion (smaller-diameter side portion)
- 6: Disc portion (bottommost portion)
- 6A: Through hole
- 7: Seal body
- 8: Sensor holder part (synthetic resin)
- 8A: Base portion
- 8B: Wrap-around portion
- 8C: Step covering portion
- 9: Concave
- 10: Nut (insert article)
- 10A: Circumferential groove
- 11: Bearing device
- 12: Inner ring
- 12A: Inner ring track surface
- 13: Outer ring
- 13A: Outer ring track surface
- 14: Rolling element
- 15: Seal member
- 16: Magnetic encoder
- 17: Support member
- 18: Fixed mold
- 19: Movable mold
- 20: Gate
- 21: Support shaft
- A: Magnetic sensor
- B: Attachment bolt
- C: Step
- D: Diameter-reduced portion
- S: Seal body

## Claims

1. A manufacturing method for a protective cover (1) having a sensor holder part (8) for use in a bearing device (11) including: an inner ring (12) with an inner ring track surface (12A) on an outer periphery; an outer ring (13) with an outer ring track surface (13A) on an inner periphery; a bearing having a rolling element (14) rolling between the inner ring track surface (12A) and the outer ring track surface (13A); a magnetic encoder (16) that is positioned at one axial end of the bearing, fixed to the inner ring (12), and has N and S poles alternately arranged at regular intervals in an circumferential direction; and a magnetic sensor (A) that is opposed to the magnetic poles of the magnetic encoder (16) to detect rotation of the magnetic encoder (16), wherein
the protective cover (1) has:
a cup-shaped main part (1A) that is formed in a cup shape from a non-magnetic steel plate, positioned when mounted at the one axial end of the bearing, and press-fitted in a mounted state into the outer ring (13); and
a synthetic resin sensor holder part (8) that is integrally joined to the cup-shaped main part (1A) while holding a nut (10) for attaching the magnetic sensor (A), the cup-shaped main part (1A) having a through hole (6A) in a bottom, and
the manufacturing method comprises:
a press working step of forming the cup-shaped main part (1A) by press working; and
an injection molding step of setting the nut (10) and the cup-shaped main part (1A) as insert articles into a metal mold, tightening the mold, charging molten plastic into a cavity to perform injection molding to form a wrap-around portion (8B) extending radially outward on an inner side of the bottom through the through hole (6A) at the sensor holder part (8) integrated with the nut (10) and the cup-shaped main part (1A).

2. The manufacturing method for a protective cover (1) having a sensor holder part (8) according to claim 1, comprising at least one of a vulcanization and adhesion step of vulcanizing and adhering an endless seal body to a periphery of the through hole in the cup-shaped main part, and an adhesive application step of applying a thermoset adhesive to the periphery.

3. The manufacturing method for a protective cover (1) having a sensor holder part (8) according to claim 1, wherein
the bottom of the cup-shaped main part (1A) has a disc portion (6) as a bottommost portion, a cylindrical portion (5) extending axially from an outer edge of the disc portion (6), and an annular portion (4) extending radially outward from an axial end edge of the cylindrical portion (5), and
the sensor holder part (8) has a portion covering the disc portion (6) and the cylindrical portion (5).

4. A manufacturing method for a protective cover (1) having a sensor holder part (8) for use in a bearing device (11) including: an inner ring (12) with an inner ring track surface (12A) on an outer periphery; an outer ring (13) with an outer ring track surface (13A) on an inner periphery; a bearing having a rolling element (14) rolling between the inner ring track surface (12A) and the outer ring track surface (13A); a magnetic encoder (16) that is positioned at one axial end of the bearing, fixed to the inner ring (12), and has N and S poles alternately arranged at regular intervals in an circumferential direction; and a magnetic sensor (A) that is opposed to the magnetic poles of the magnetic encoder (16) to detect rotation of the magnetic encoder (16), wherein
the protective cover (1) has:
a cup-shaped main part (1A) that is formed in a cup shape from a non-magnetic steel plate, positioned when mounted at the one axial end of the bearing, and press-fitted in a mounted state
into the outer ring (13); and
a synthetic resin sensor holder part (8) that is integrally joined to the cup-shaped main part (1A) while holding a nut (10) for attaching the magnetic sensor (A),
the bottom of the cup-shaped main part (1A) has a disc portion (6) as a bottommost portion, a cylindrical portion (5) extending axially from an outer edge of the disc portion (6), and an annular portion (4) extending radially outward from an axial end edge of the cylindrical portion (5), the cylindrical portion (5) having a concave (9) or a convex, and
the manufacturing method comprises:
a press working step of forming the cup-shaped main part (1A) by press working; and
an injection molding step of setting the nut (10) and the cup-shaped main part (1A) as insert articles into a metal mold, tightening the mold, charging molten plastic into a cavity to perform injection molding to form a step covering portion (8C) covering a step (C) formed by the disc portion (6) and the cylindrical portion (5) at the sensor holder part (8) integrated with the nut (10) and the cup-shaped main part (1A).

5. A manufacturing method for a bearing device (11) including: an inner ring (12) with an inner ring track surface (12A) on an outer periphery; an outer ring (13) with an outer ring track surface (13A) on an inner periphery; a bearing having a rolling element (14) rolling between the inner ring track surface (12A) and the outer ring track surface (13A); a magnetic encoder (16) that is positioned at one axial end of the bearing, fixed to the inner ring (12), and has N and S poles alternately arranged at regular intervals in an circumferential direction; and a magnetic sensor (A) that is opposed to the magnetic poles of the magnetic encoder to detect rotation of the magnetic encoder (16),
the manufacturing method comprising a step of press-fitting the protective cover (1) manufactured by the manufacturing method for the protective cover (1) having the sensor holder part (8) according to any one of claims 1 to 4 into the outer ring (13).

## Patentansprüche

1. Herstellungsverfahren für eine Schutzabdeckung (1) mit einem Sensorhalterteil (8) zur Verwendung in einer Lagervorrichtung (11), umfassend: einen Innenring (12) mit einer Innenringlauffläche (12A) an einem Außenumfang; einen Außenring (13) mit einer Außenringlauffläche (13A) an einem Innenumfang; ein Lager mit einem Wälzelement (14), das zwischen der Innenringlauffläche (12A) und der Außenringlauffläche (13A) rollt; einen Magnetdrehgeber (16), der an einem axialen Ende des Lagers positioniert, am Innenring (12) befestigt ist und in regelmäßigen Abständen in Umfangsrichtung abwechselnd angeordnete Nord- und Südpole aufweist; und einen Magnetsensor (A), der den Magnetpolen des Magnetdrehgebers (16) gegenüberliegt, um eine Drehung des Magnetdrehgebers (16) zu erkennen, wobei
die Schutzabdeckung (1) aufweist:
ein schalenförmiges Hauptteil (1A), das aus einer nichtmagnetischen Stahlplatte in einer Schalenform gebildet ist, bei Montage an dem einen axialen Ende des Lagers positioniert ist und in einem montierten Zustand in den Außenring (13) eingepresst ist; und
ein Kunstharz-Sensorhalterteil (8), das einstückig mit dem schalenförmigen Hauptteil (1A) verbunden ist, während es eine Mutter (10) zum Anbringen des Magnetsensors (A) hält,
wobei das schalenförmige Hauptteil (1A) in einem Boden eine Durchgangsöffnung (6A) aufweist und
das Herstellungsverfahren umfasst:
einen Pressarbeitsschritt, bei dem das schalenförmige Hauptteil (1A) durch Pressbearbeitung gebildet wird; und
einen Spritzgießschritt, bei dem die Mutter (10) und das schalenförmige Hauptteil (1A) als Einsatzartikel in einer Metallform angeordnet werden, die Form zusammengezogen wird, geschmolzener Kunststoff in einen Hohlraum gegeben wird, um durch Spritzgießen einen Umfassungsabschnitt (8B) an dem mit der Mutter (10) und dem schalenförmigen Hauptteil (1A) integrierten Sensorhalterteil (8) zu bilden, der sich auf einer Innenseite des Bodens durch die Durchgangsöffnung (6A) radial nach außen erstreckt.

2. Herstellungsverfahren für eine Schutzabdeckung (1) mit einem Sensorhalterteil (8) nach Anspruch 1, das einen Vulkanisierungs- und Anhaftungsschritt umfasst, bei denen ein endloser Dichtungskörper an einen Rand der Durchgangsöffnung im schalenförmigen Hauptteil vulkanisiert und geklebt wird, und/oder einen Klebstoffauftragungsschritt, bei dem ein wärmehärtender Klebstoff auf den Rand aufgetragen wird.

3. Herstellungsverfahren für eine Schutzabdeckung (1) mit einem Sensorhalterteil (8) nach Anspruch 1, wobei
der Boden des schalenförmigen Hauptteils (1A) als einen untersten Teil einen Scheibenabschnitt (6), einen zylindrischen Abschnitt (5), der sich axial von einer Außenkante des Scheibenabschnitts (6) erstreckt, und einen Ringabschnitt (4) aufweist, der sich von einer axialen Endkante des zylindrischen Abschnitts (5) radial nach außen erstreckt, und
das Sensorhalterteil (8) einen Abschnitt aufweist, der den Scheibenabschnitt (6) und den zylindrischen Abschnitt (5) bedeckt.

4. Herstellungsverfahren für eine Schutzabdeckung (1) mit einem Sensorhalterteil (8) zur Verwendung in einer Lagervorrichtung (11), umfassend: einen Innenring (12) mit einer Innenringlauffläche (12A) an einem Außenumfang; einen Außenring (13) mit einer Außenringlauffläche (13A) an einem Innenumfang; ein Lager mit einem Wälzelement (14), das zwischen der Innenringlauffläche (12A) und der Außenringlauffläche (13A) rollt; einen Magnetdrehgeber (16), der an einem axialen Ende des Lagers positioniert, am Innenring (12) befestigt ist und in regelmäßigen Abständen in Umfangsrichtung abwechselnd angeordnete Nord- und Südpole aufweist; und einen Magnetsensor (A), der den Magnetpolen des Magnetdrehgebers (16) gegenüberliegt, um eine Drehung des Magnetdrehgebers (16) zu erkennen, wobei
die Schutzabdeckung (1) aufweist:
ein schalenförmiges Hauptteil (1A), das aus einer nichtmagnetischen Stahlplatte in einer Schalenform gebildet ist, bei Montage an dem einen axialen Ende des Lagers positioniert ist und in einem montierten Zustand in den Außenring (13) eingepresst ist; und
ein Kunstharz-Sensorhalterteil (8), das einstückig mit dem schalenförmigen Hauptteil (1A) verbunden ist, während es eine Mutter (10) zum Anbringen des Magnetsensors (A) hält,
wobei der Boden des schalenförmigen Hauptteils (1A) als einen untersten Teil einen Scheibenabschnitt (6), einen zylindrischen Abschnitt (5), der sich axial von einer Außenkante des Scheibenabschnitts (6) erstreckt, und einen Ringabschnitt (4) aufweist, der sich von einer axialen Endkante des zylindrischen Abschnitts (5) radial nach außen erstreckt, wobei der zylindrische Abschnitt (5) eine Konkavität (9) oder Konvexität aufweist ist, und
das Herstellungsverfahren umfasst:
einen Pressarbeitsschritt, bei dem das schalenförmige Hauptteil (1A) durch Pressbearbeitung gebildet wird; und
einen Spritzgießschritt, bei dem die Mutter (10) und das schalenförmige Hauptteil (1A) als Einsatzartikel in einer Metallform angeordnet werden, die Form zusammengezogen wird, geschmolzener Kunststoff in einen Hohlraum gegeben wird, um durch Spritzgießen einen Stufenabdeckungsabschnitt (8C) an dem mit der Mutter (10) und dem schalenförmigen Hauptteil (1A) integrierten Sensorhalterteil (8) zu bilden, der eine durch den Scheibenabschnitt (6) und den zylindrischen Abschnitt (5) gebildete Stufe (C) bedeckt.

5. Herstellungsverfahren für eine Lagervorrichtung (11), umfassend: einen Innenring (12) mit einer Innenringlauffläche (12A) an einem Außenumfang; einen Außenring (13) mit einer Außenringlauffläche (13A) an einem Innenumfang; ein Lager mit einem Wälzelement (14), das zwischen der Innenringlauffläche (12A) und der Außenringlauffläche (13A) rollt; einen Magnetdrehgeber (16), der an einem axialen Ende des Lagers positioniert, am Innenring (12) befestigt ist und in regelmäßigen Abständen in Umfangsrichtung abwechselnd angeordnete Nord- und Südpole aufweist; und einen Magnetsensor (A), der den Magnetpolen des Magnetdrehgebers gegenüberliegt, um eine Drehung des Magnetdrehgebers (16) zu erkennen,
wobei das Herstellungsverfahren einen Schritt des Einpressens der Schutzabdeckung (1), die durch das Herstellungsverfahren für die Schutzabdeckung (1) mit dem Sensorhalterteil (8) nach einem der Ansprüche 1 bis 4 hergestellt wurde, in den Außenring (13) umfasst.

## Revendications

1. Procédé de fabrication pour une couverture protectrice (1) présentant une partie de support de capteur (8) pour une utilisation dans un dispositif de palier (11) incluant : un anneau interne (12) avec une surface de piste d'anneau interne (12A) sur une périphérie externe ; un anneau externe (13) avec une surface de piste d'anneau externe (13A) sur une périphérie interne ; un palier présentant un élément de roulement (14) roulant entre la surface de piste d'anneau interne (12A) et la surface de piste d'anneau externe (13A) ; un encodeur magnétique (16) qui est positionné à une extrémité axiale du palier, fixé à l'anneau interne (12), et présente des pôles N et S disposés de manière alternée à des intervalles réguliers dans une direction circonférentielle ; et un capteur magnétique (A) qui est opposé aux pôles magnétiques de l'encodeur magnétique (16) pour détecter une rotation de l'encodeur magnétique (16), dans lequel
la couverture protectrice (1) présente :
une partie principale en forme de coupelle (1A) qui est formée dans une forme de coupelle à partir d'une plaque d'acier non-magnétique, positionnée lorsque montée à la une extrémité axiale du palier, et ajustée à la presse dans un état monté dans l'anneau externe (13) ; et
une partie de support de capteur en résine synthétique (8) qui est intégralement jointe à la partie principale en forme de coupelle (1A) tout en supportant un écrou (10) pour attacher le capteur magnétique (A), la partie principale en forme de coupelle (1A) présentant une perforation traversante (6A) dans un fond, et
le procédé de fabrication comprend :
une étape d'usinage à la presse formant la partie principale en forme de coupelle (1A) par usinage à la presse ; et
une étape de moulage par injection fixant l'écrou (10) et la partie principale en forme de coupelle (1A) comme articles d'insertion dans un moule en métal, serrant le moule, chargeant du plastique fondu dans une cavité pour réaliser un moulage par injection pour former une portion enveloppante (8B) s'étendant radialement vers l'extérieur sur un côté interne du fond à travers la perforation traversante (6A) sur la partie de support de capteur (8) intégrée avec l'écrou (10) et la partie principale en forme de coupelle (1A).

2. Procédé de fabrication pour une couverture protectrice (1) présentant une partie de support de capteur (8) selon la revendication 1, comprenant au moins une d'une étape de vulcanisation et d'adhérence vulcanisant et faisant adhérer un corps de joint sans fin à une périphérie de la perforation traversante dans la partie principale en forme de coupelle, et d'une étape d'application d'adhésif appliquant un adhésif thermodurcissable à la périphérie.

3. Procédé de fabrication pour une couverture protectrice (1) présentant une partie de support de capteur (8) selon la revendication 1, dans lequel
le fond de la partie principale en forme de coupelle (1A) présente une portion de disque (6) comme une portion la plus au fond, une portion cylindrique (5) s'étendant axialement à partir d'un bord externe de la portion de disque (6), et une portion annulaire (4) s'étendant radialement vers l'extérieur à partir d'un bord d'extrémité axiale de la portion cylindrique (5), et
la partie de support de capteur (8) présente une portion recouvrant la portion de disque (6) et la portion cylindrique (5).

4. Procédé de fabrication pour une couverture protectrice (1) présentant une partie de support de capteur (8) pour une utilisation dans un dispositif de palier (11) incluant : un anneau interne (12) avec une surface de piste d'anneau interne (12A) sur une périphérie externe ; un anneau externe (13) avec une surface de piste d'anneau externe (13A) sur une périphérie interne ; un palier présentant un élément de roulement (14) roulant entre la surface de piste d'anneau interne (12A) et la surface de piste d'anneau externe (13A) ; un encodeur magnétique (16) qui est positionné à une extrémité axiale du palier, fixé à l'anneau interne (12), et présente des pôles N et S disposés de manière alternée à des intervalles réguliers dans une direction circonférentielle ; et un capteur magnétique (A) qui est opposé aux pôles magnétiques de l'encodeur magnétique (16) pour détecter une rotation de l'encodeur magnétique (16), dans lequel
la couverture protectrice (1) présente :
une partie principale en forme de coupelle (1A) qui est formée dans une forme de coupelle à partir d'une plaque d'acier non-magnétique, positionnée lorsque montée à la une extrémité axiale du palier, et ajustée à la presse dans un état monté dans l'anneau externe (13) ; et
une partie de support de capteur en résine synthétique (8) qui est intégralement jointe à la partie principale en forme de coupelle (1A) tout en supportant un écrou (10) pour attacher le capteur magnétique (A),
le fond de la partie principale en forme de coupelle (1A) présente une portion de disque (6) comme une portion la plus au fond, une portion cylindrique (5) s'étendant axialement à partir d'un bord externe de la portion de disque (6), et une portion annulaire (4) s'étendant radialement vers l'extérieur à partir d'un bord d'extrémité axiale de la portion cylindrique (5), la portion cylindrique (5) présentant un concave (9) ou un convexe, et
le procédé de fabrication comprend :
une étape d'usinage à la presse formant la partie principale en forme de coupelle (1A) par usinage à la presse ; et
une étape de moulage par injection fixant l'écrou (10) et la partie principale en forme de coupelle (1A) comme articles d'insertion dans un moule en métal, serrant le moule, chargeant du plastique fondu dans une cavité pour réaliser un moulage par injection pour former une portion de couverture (8C) recouvrant une marche (C) formée par la portion de disque (6) et la portion cylindrique (5) sur la partie de support de capteur (8) intégrée avec l'écrou (10) et la partie principale en forme de coupelle (1A).

5. Procédé de fabrication pour un dispositif de palier (11) incluant : un anneau interne (12) avec une surface de piste d'anneau interne (12A) sur une périphérie externe ; un anneau externe (13) avec une surface de piste d'anneau externe (13A) sur une périphérie interne ; un palier présentant un élément de roulement (14) roulant entre la surface de piste d'anneau interne (12A) et la surface de piste d'anneau externe (13A) ; un encodeur magnétique (16) qui est positionné à une extrémité axiale du palier, fixé à l'anneau interne (12), et présente des pôles N et S disposés de manière alternée à des intervalles réguliers dans une direction circonférentielle ; et un capteur magnétique (A) qui est opposé aux pôles magnétiques de l'encodeur magnétique pour détecter une rotation de l'encodeur magnétique (16),
le procédé de fabrication comprenant une étape d'ajustement à la presse de la couverture protectrice (1) fabriquée par le procédé de fabrication pour la couverture protectrice (1) présentant la partie de support de capteur (8) selon l'une quelconque des revendications 1 à 4 dans l'anneau externe (13).
